(19) Europäisches Patentamt
European Patent Office
Office européen des brevets

(11) **EP 3 327 851 A1**

(12) **EUROPEAN PATENT APPLICATION**
published in accordance with Art. 153(4) EPC

(43) Date of publication:
**30.05.2018 Bulletin 2018/22**

(51) Int Cl.:
*H01M 10/052* [(2010.01)]  *H01M 2/02* [(2006.01)]
*H01M 4/36* [(2006.01)]  *H01M 4/505* [(2010.01)]
*H01M 4/525* [(2010.01)]  *H01M 10/0587* [(2010.01)]

(21) Application number: **15834630.4**

(22) Date of filing: **17.07.2015**

(86) International application number:
**PCT/JP2015/070595**

(87) International publication number:
**WO 2017/013718 (26.01.2017 Gazette 2017/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Kabushiki Kaisha Toshiba**
**Minato-ku**
**Tokyo 105-8001 (JP)**

(72) Inventors:
• **MURASHI, Yasuaki**
  **Tokyo 105-8001 (JP)**

• **YOSHIKAWA, Hikaru**
  **Tokyo 105-8001 (JP)**
• **SARUWATARI, Hidesato**
  **Tokyo 105-8001 (JP)**
• **KURIYAMA, Hiromichi**
  **Tokyo 105-8001 (JP)**
• **YAMAMOTO, Dai**
  **Tokyo 105-8001 (JP)**
• **NISHIO, Naoki**
  **Tokyo 105-8001 (JP)**
• **KAWAMURA, Koichi**
  **Tokyo 105-8001 (JP)**

(74) Representative: **Hoffmann Eitle**
**Patent- und Rechtsanwälte PartmbB**
**Arabellastraße 30**
**81925 München (DE)**

(54) **NON-AQUEOUS ELECTROLYTE BATTERY AND BATTERY PACK**

(57)    Problem
   To provide a nonaqueous electrolyte battery having a high average operating voltage and high-temperature durability.
   Solution
   According to an embodiment, a nonaqueous electrolyte battery includes a positive electrode, a negative electrode, and a nonaqueous electrolyte. The negative electrode includes an oxide of titanium as a negative electrode active material. The positive electrode includes as a positive electrode active material, spinel-type lithium manganese oxide represented by Chemical Formula $LiMn_{2-x}M_xO_4$, where M is at least one selected from the group consisting of Mg, Ti, Cr, Fe, Co, Zn, Al, and Ga, and x is from 0.22 to 0.7. When the battery is charged at a constant current of 1 C, thereafter charged at a constant voltage of 2.8 V, then charged at a constant voltage until a current value becomes 0.05 C, and from this state, discharged at a constant current of 0.5 C until a voltage becomes 1.5 V, a curve obtained by taking dQ/dV during the discharge as a vertical axis and voltage as a horizontal axis has a first peak and a second peak. The first peak is a peak appearing within a range of from 2.54 V to 2.65 V, and the second peak is a peak appearing within a range of from 2.4 V to less than 2.54 V. A first dQ/dV peak intensity A and a second dQ/dV peak intensity B satisfy $0.8 \leq A/B \leq 1.0$.

F I G. 6

**Description**

Technical Field

Embodiments relate to a nonaqueous electrolyte battery and a battery pack.

Background Art

There has been developed a system exhibiting input and output characteristics higher than those of a conventional lead storage battery system. In such a system, a storage system is configured in which a 12 V type lead storage battery and a lithium-ion secondary battery are connected in parallel. Such a storage system is expected to enable power generation using recovered energy when the storage system is mounted on a vehicle, for example. The storage system is expected to provide large current discharge required for restarting an engine after idling stop.

Citation List

Patent Literature

[Patent Literature 1] Jpn. Pat. Appln. KOKAI Publication No. 2001-143705

Non-Patent Literature

[Non-Patent Literature 1] GS YUASA Technical Report, December 2004, Vol. 1 (1)

Disclosure of Invention

Technical Problem

Embodiments provide a nonaqueous electrolyte battery and a battery pack which have a high average operating voltage and high-temperature durability.

Solution to Problem

According to an embodiment, a nonaqueous electrolyte battery is provided. The nonaqueous electrolyte battery includes a negative electrode, a positive electrode, and a nonaqueous electrolyte. The negative electrode includes an oxide of titanium as a negative electrode active material. The positive electrode includes as a positive electrode active material, spinel-type lithium manganese oxide. The spinel-type lithium manganese oxide is represented by Chemical Formula $LiMn_{2-x}M_xO_4$. Herein, M is at least one selected from the group consisting of Mg, Ti, Cr, Fe, Co, Zn, Al, and Ga. Subscript x satisfies the inequality $0.22 \leq x \leq 0.7$.

When the nonaqueous electrolyte battery of the embodiment is charged at a constant current of 1 C, thereafter charged at a constant voltage of 2.8 V, then charged at a constant voltage until a current value becomes 0.05 C, and from this state, discharged at a constant current of 0.5 C until a voltage becomes 1.5 V, a curve obtained by taking dQ/dV during the discharge as a vertical axis and voltage as a horizontal axis has a first peak and a second peak. The firs peak is a peak that appears within a range of from 2.54 V to 2.65 V, and the second peak is a peak that appears within a range of from 2.4 V to less than 2.54 V. A dQ/dV peak intensity A of the first peak and a dQ/dV peak intensity B of the second peak satisfy $0.8 \leq A/B \leq 1.0$.

Brief Description of Drawings

FIG. 1 is a partially cutout perspective view of a nonaqueous electrolyte battery as a first example according to a first embodiment.
FIG. 2 is an enlarged sectional view of a part A in FIG. 1.
FIG. 3 is a partially cutout perspective view of a nonaqueous electrolyte battery as a second example according to the first embodiment.
FIG. 4 is an exploded perspective view of a battery pack as an example according to a second embodiment.
FIG. 5 is a block diagram showing an electric circuit of the battery pack shown in FIG. 4.

FIG. 6 shows a plot curve of dQ/dV to a voltage obtained for a nonaqueous electrolyte battery of Example 1.

FIG. 7 shows a plot curve of dQ/dV to a voltage obtained for a nonaqueous electrolyte battery of Example 3.

FIG. 8 shows a plot curve of dQ/dV to a voltage obtained for a nonaqueous electrolyte battery of Comparative Example 2.

Best Mode for Carrying Out the Invention Hereinafter, embodiments will be described with reference to the drawings. The same reference numerals denote common components throughout the embodiments and repetitious descriptions are omitted. Each of these drawings is a schematic diagram for describing and promoting the understanding of the embodiment. Though there are parts different from an actual device in shape, dimension and proportion, these structural designs may be properly changed taking the following descriptions and known technologies into consideration.

(First Embodiment)

According to a first embodiment, a nonaqueous electrolyte battery is provided. The nonaqueous electrolyte battery includes a negative electrode, a positive electrode, and a nonaqueous electrolyte. The negative electrode includes an oxide of titanium as a negative electrode active material. The positive electrode includes as a positive electrode active material, spinel-type lithium manganese oxide. The spinel-type lithium manganese oxide is represented by Chemical Formula $LiMn_{2-x}M_xO_4$. Herein, the element M is at least one selected from the group consisting of Mg, Ti, Cr, Fe, Co, Zn, Al, and Ga. Subscript x satisfies the inequality $0.22 \leq x \leq 0.7$.

In the case that the nonaqueous electrolyte battery of the embodiment is charged at a constant current of 1 C, thereafter charged at a constant voltage of 2.8 V, and then charged at a constant voltage until a current value becomes 0.05 C, given that the state thus reached is defined as SOC 100%, when the nonaqueous electrolyte battery is discharged from SOC 100% at a constant current of 0.5 C until a voltage becomes 1.5 V, a curve obtained by taking dQ/dV as a vertical axis and voltage as a horizontal axis has a first peak and a second peak. The first peak is a peak that appears within a range of from 2.54 V to 2.65 V, and the second peak is a peak that appears within a range of from 2.4 V to less than 2.54 V. A dQ/dV peak intensity A of the first peak and a dQ/dV peak intensity B of the second peak satisfy $0.8 \leq A/B \leq 1.0$.

The nonaqueous electrolyte battery according to the embodiment has the above-mentioned constitution, and therefore can increase an average operating voltage, and at the same time, suppress the deterioration of the positive electrode under a high-temperature environment and decrease of input and output characteristics.

In an idling stop vehicle employing an idling stop system, large current discharge characteristics are required for restarting the engine of the automobile. It is known that, when a lead storage battery is used for the idling stop system requiring the large current discharge characteristics, the life of the lead storage battery is remarkably decreased. The main cause for decrease in life is considered to be in that the voltage reduction during discharge is large in lead storage batteries and therefore, coarse particles of lead sulfate forms on an electrode surface. In order to suppress such deterioration, it is necessary to maintain the battery in a high voltage range to reduce the discharge load on the lead storage battery. A preferable voltage range for suppressing the deterioration is considered to be from 12.5 V to 14.0 V.

In order to reduce the load on the lead storage battery, there is developed a storage system in which lithium-ion secondary batteries are connected in parallel. As described above, the nonaqueous electrolyte battery according to the embodiment can increase the average operating voltage. Therefore, the deterioration of the lead storage battery can be suppressed in the storage system by connecting the nonaqueous electrolyte battery to the lead storage battery in parallel.

In the plot of dQ/dV to voltage when the nonaqueous electrolyte battery of the embodiment is discharged at a constant current of 0.5 C until the voltage becomes 1.5 V from SOC 100%, the curve may have a third peak within a range of from 2.2 V to less than 2.4 V. The electric resistance of a nonaqueous electrolyte secondary battery may increase as use time passes. The increase of electric resistance is suppressed in a nonaqueous electrolyte secondary battery in which the curve of the dQ/dV plot has the third peak.

The spinel-type lithium manganese oxide included as the positive electrode active material is one in which a part of Mn is substituted with at least one element M selected from Mg, Ti, Cr, Fe, Co, Zn, Al, and Ga in the spinel-type lithium manganese oxide represented by $LiMn_2O_4$. The spinel-type lithium manganese oxide of the embodiment is represented by Chemical Formula $Li_{1-a}Mn_{2-x}M_xO_4$. Herein, subscript x satisfies the inequality $0.22 \leq x \leq 0.7$.

When a is 0.5 or more in $Li_{1-a}Mn_2O_4$ in which Mn is not substituted with the element M, a phase of $Li_{0.5}Mn_2O_4$ and a phase of $\lambda\text{-}MnO_2$ are known to be in a two-phase coexistence state. The two-phase coexistence state is resolved by substituting Mn with the element M. Thereby, the crystal structure becomes stable, and therefore, the elution of Mn is suppressed. As a result, the nonaqueous electrolyte battery including such a positive electrode active material has excellent high-temperature durability.

When x is less than 0.22 in the spinel-type lithium manganese oxide represented by Chemical Formula $Li_{1-a}Mn_{2-x}M_xO_4$, the two-phase coexistence state remains. Therefore, a deterioration suppressing effect provided by the stabilization of the crystal structure is not sufficiently obtained. When x is more than 0.7, a spinel-type crystal structure cannot be maintained, which causes the crystal structure of the lithium manganese oxide to become unstable, on the contrary.

That the dQ/dV curve during constant current discharge of the nonaqueous electrolyte battery has the first peak appearing within a range of from 2.54 V to 2.65 V means that lithium ions are absorbed by the spinel-type lithium manganese oxide. That the dQ/dV curve has the second peak appearing within a range of from 2.4 V to less than 2.54 V also means that the lithium ions are absorbed by the spinel-type lithium manganese oxide. However, the valence of Mn in the spinel-type lithium manganese oxide is different, between the first peak and the second peak.

The first peak in the dQ/dV curve means that the valence of Mn in the spinel-type lithium manganese oxide is 4 ($Mn^{4+}$). On the other hand, the second peak means that the valence of Mn is 3 ($Mn^{3+}$). When the valence of Mn is 3, the spinel-type lithium manganese oxide is more unstable than when the valence of Mn is 4. In such a spinel-type lithium manganese oxide, deterioration during charge and discharge is more intense, and Mn tends to be more easily eluted.

When the valence of Mn is 4, the spinel-type lithium manganese oxide is more stable. On the other hand, when the valence of Mn is 3, the spinel-type lithium manganese oxide is unstable. Therefore, it is desirable that the spinel-type lithium manganese oxide in which the valence of Mn is 3 contributes to the charge and discharge of the battery in smaller proportion. For this reason, it is desirable that the peak intensity A of the first peak is lower than the peak intensity B of the second peak, that is, that a peak intensity ratio A/B in a dQ/dV plot is 1.0 or less.

When the ratio of Mn having a valence of 4 is increased in the positive electrode active material, however, the width of the positive electrode potential becomes wide. Since a region which does not correspond to the negative electrode potential is increased when the width of the positive electrode potential becomes excessively large, the capacity of the whole battery decreases. Furthermore, the operating voltage of the battery is decreased, therefore not preferable. In order to maintain the capacity of the nonaqueous electrolyte battery high and to keep the operating voltage high, the peak intensity ratio A/B is desirably 0.8 or more.

Furthermore, the positive electrode may include, in addition to the spinel-type lithium manganese oxide, at least one positive electrode active material having a capacity per weight of active material of from 10 mAh/g to 150 mAh/g within a range of from 3.0 V to 3.9 V (vs. Li/Li$^+$) to the oxidation-reduction potential of metal Li. By the inclusion, deterioration of the spinel-type lithium manganese oxide can be reduced further. This is because, by including another such positive electrode active material in the positive electrode, the potential can be prevented from decreasing to 3.0 V or less.

When the potential becomes 3.0 V or less, $Li_{1+b}Mn_{2-x}M_xO_4$ with an increased content of Li is formed. The crystal structure of $Li_{1+b}Mn_{2-x}M_xO_4$ having excessive Li is apt to change from a cubical crystal like that in $Li_{1-a}Mn_{2-x}M_xO_4$ to a tetragonal crystal, and is unstable in structure. By including in the positive electrode, in addition to the spinel-type lithium manganese oxide, the other positive electrode active material having a capacity within a range of from 3.0 V to 3.9 V (vs. Li/Li$^+$) in an amount of from 0.01 to 0.05 when a weight per area of the positive electrode is defined as 1, the potential can be prevented from decreasing to 3.0 V or less. That is, by including the other such positive electrode active material in the positive electrode at an appropriate amount, the crystal structure of the spinel-type lithium manganese oxide can be maintained stably. When the content of the other positive electrode active material is 0.01 or less, the potential cannot be sufficiently prevented from decreasing to 3.0 V or less. On the contrary, when the content of the other positive electrode active material is 0.05 or more, a sufficiently high average operating voltage cannot be obtained. Examples of the other such positive electrode active material include lithium-nickel composite oxide (e.g., $LiNiO_2$), lithium-cobalt composite oxide ($LiCoO_2$), lithium-nickel-cobalt composite oxide (e.g., $LiNi_{1-x}Co_xO_2$, 0 < x < 1), lithium-nickel-cobalt-manganese composite oxide (e.g., $LiNi_{1-x-y}Co_xMn_yO_2$, 0 < x < 1, 0 < y < 1, 0 < x + y < 1), lithium-manganese-cobalt composite oxide (e.g., $LiMn_xCo_{1-x}O_2$, 0 < x < 1), and lithium-iron phosphate ($LiFePO_4$).

That the dQ/dV curve has the third peak means that lithium ions are absorbed and released by a positive electrode active material including cobalt (Co). When gas is generated in the nonaqueous electrolyte battery, the electrode may expand. A gap is formed in the expanded electrode, and this gap causes electric resistance to increase. In the nonaqueous electrolyte battery in which absorption and release of lithium ions during charge and discharge is performed by the positive electrode active material including Co, even if gas is generated, the gas is treated by reaction between the positive electrode active material including Co and the gas. Therefore, expansion of the electrode is suppressed, and as a result, increase of electric resistance can be prevented, therefore preferable.

The nonaqueous electrolyte battery having the third peak in the dQ/dV curve has an operating voltage lower than that of the nonaqueous electrolyte battery which does not have the third peak. However, the suppression of increase of electric resistance sufficiently compensates for the demerit due to decrease of operating voltage.

The nonaqueous electrolyte battery according to the embodiments, in which the above-mentioned dQ/dV plot can be obtained during constant current discharge of the battery, can be manufactured, for example, by subjecting the assembled battery to aging under a suitable condition and then degassing.

The aging is performed, for example, by preparing a nonaqueous electrolyte battery adjusted so that a charge state is set to SOC 20%, and leaving the nonaqueous electrolyte battery under an environment of 60°C for 90 hours. A temperature for the aging can be raised or lowered, as necessary. A time for the aging can be extended or shortened, as necessary.

Degassing can be performed, for example, by subjecting the nonaqueous electrolyte battery to aging in a state where the nonaqueous electrolyte battery is subjected to temporary sealing, and releasing the temporary sealing after the aging is ended.

The peak intensity ratio A/B in the dQ/dV plot can be changed, for example, according to the amount of Al added to the spinel-type lithium manganese oxide as the positive electrode active material. When the amount of Al added to the spinel-type lithium manganese oxide is increased, the peak intensity A of the first peak tends to decrease. Peak intensity A/B is changed also by a ratio between a capacity per unit area of the positive electrode and a capacity per unit area of the negative electrode in the nonaqueous electrolyte battery. In the nonaqueous electrolyte battery of the embodiment, the peak intensity A of the first peak tends to decrease while the peak intensity B of the second peak tends to increase, as the ratio of the capacity per unit area of the positive electrode is increased.

The appearance of the third peak may be influenced by the design of the positive electrode or the negative electrode included in the nonaqueous electrolyte battery. For example, by including an active material having a wide potential width in the negative electrode, the third peak becomes more likely to appear. Also, by increasing the content of the positive electrode active material including Co in the positive electrode, the third peak may be exhibited.

As described above, the nonaqueous electrolyte battery according to the first embodiment can achieve both an effect of increasing the average operating voltage and an effect of suppressing decrease of input and output characteristics caused by deterioration of the positive electrode under a high-temperature environment. That is, the nonaqueous electrolyte battery according to the first embodiment can exhibit a high average operating voltage and excellent high-temperature durability.

Next, a nonaqueous electrolyte battery according to a first embodiment will be described in more detail.

The nonaqueous electrolyte battery according to the first embodiment includes a negative electrode, a positive electrode, and a nonaqueous electrolyte.

The negative electrode may include a negative electrode current collector and a negative electrode mixture layer formed on the negative electrode current collector.

The negative electrode current collector may include on a surface, a portion that does not support the negative electrode mixture layer. The portion can function as a negative electrode tab. Alternatively, the negative electrode may also further include a negative electrode tab independent from the negative electrode current collector.

The negative electrode mixture layer may include an oxide of titanium, as a negative electrode active material. The negative electrode mixture layer may further include a conductive agent and a binder, as necessary.

The positive electrode may include a positive electrode current collector and a positive electrode mixture layer formed on the positive electrode current collector.

The positive electrode current collector may include on a surface, a portion that does not support the positive electrode mixture layer. The portion can function as a positive electrode tab. Alternatively, the positive electrode may also further include a positive electrode tab independent from the positive electrode current collector.

The positive electrode mixture layer may include a spinel-type lithium manganese oxide, as a positive electrode active material. The positive electrode mixture layer may further include a conductive agent and a binder, as necessary.

The positive electrode and the negative electrode can constitute an electrode group. For example, in the electrode group, the positive electrode mixture layer and the negative electrode mixture layer may be faced opposite to each other interposing a separator. The structure of the electrode group is not limited, and the electrode group can be of various structures. For example, the electrode group may have a stacked structure. The electrode group having the stacked structure can be obtained by stacking, for example, a multitude of positive electrodes and negative electrodes with the separator sandwiched between the positive electrode mixture layer and the negative electrode mixture layer. Alternatively, the electrode group may have a wound structure, for example. The wound electrode group can be obtained, for example, by laminating a separator, a positive electrode, another separator, and a negative electrode, in this order, to produce a laminate, and winding the laminate such that outermost layer would be the negative electrode.

The nonaqueous electrolyte battery may further include a negative electrode terminal and a positive electrode terminal. The negative electrode terminal can function as a conductor for electron transfer between the negative electrode and an external terminal by electrically connecting a part of the negative electrode terminal to a part of the negative electrode. The negative electrode terminal may be connected to, for example, the negative electrode current collector, particularly the negative electrode tab. Similarly, the positive electrode terminal may function as a conductor for electron transfer between the positive electrode and an external circuit by electrically connecting a part of the positive electrode terminal to a part of the positive electrode. The positive electrode terminal may be connected to, for example, the positive electrode current collector, particularly the positive electrode tab.

The nonaqueous electrolyte battery according to the first embodiment may further include a container member. The container member can house the electrode group and the nonaqueous electrolyte. The electrode group may be impregnated with the nonaqueous electrolyte within the container member. A part of the positive electrode terminal and a part of the negative electrode terminal may extend out from the container member.

Hereinafter, the negative electrode, the positive electrode, the nonaqueous electrolyte, the separator, the positive electrode terminal, the negative electrode terminal, and the container member will be described in more detail.

(1) Negative Electrode

As the negative electrode current collector, a sheet including a material having high electrical conductivity may be used. For example, an aluminum foil or an aluminum alloy foil may be used as the negative electrode current collector. When the aluminum foil or the aluminum alloy foil is used, the thickness is, for example, 20 $\mu$m or less, and preferably 15 $\mu$m or less. The aluminum alloy foil may include one or more of magnesium, zinc, silicon, or the like. The amount of transition metals such as iron, copper, nickel, and chromium included in the aluminum alloy foil is preferably 1% or less.

The oxide of titanium included in the negative electrode is preferably at least one selected from the group consisting of a lithium-titanium composite oxide having a spinel type structure ($Li_{4+x}Ti_5O_{12}$ (a subscript x varies between 0 and 3 according to a state of charge)), lithium titanate having a ramsdellite type structure ($Li_{2+x}Ti_3O_7$ (a subscript x varies between 0 and 2 according to a state of charge)), monoclinic titanium dioxide ($Li_xTiO_2$ (B) (a subscript x varies between 0 and 1 according to a state of charge)), and a monoclinic niobium-titanium composite oxide (for example, $Li_xNb_2TiO_7$ (a subscript x varies between 0 and 4 according to a state of charge)). More preferably, the oxide of titanium is the lithium-titanium composite oxide having a spinel type structure.

The oxide of titanium may be included in the negative electrode mixture layer as negative electrode active material particles including the oxide of titanium. The negative electrode active material particles preferably have an average primary particle size of 5 $\mu$m or less. When the average primary particle size is 5 $\mu$m or less, an effective area contributing to an electrode reaction can be sufficiently secured. Therefore, good discharge characteristics with a large current can be obtained.

The negative electrode active material particles preferably have a specific surface area of 1 to 10 $m^2$/g. When the specific surface area is 1 $m^2$/g or greater, an effective area contributing to an electrode reaction is sufficient. Therefore, good discharge characteristics with a large current can be obtained for the nonaqueous electrolyte battery. On the other hand, when the specific surface area is 10 $m^2$/g or less, a reaction between the negative electrode active material particles and a nonaqueous electrolyte is suppressed. Therefore, decrease of a charge and discharge efficiency and gas generation during storage can be suppressed.

A negative electrode conductive agent is used in order to improve current-collecting performance, as necessary. The negative electrode conductive agent is, for example, carbon material. The carbon material preferably has high adsorption performance of alkali metals and high conductivity. The carbon material is, for example, acetylene black, carbon black, or the like.

A negative electrode binder is used in order to bind the negative electrode active material particles and the negative electrode current collector. Examples of the negative electrode binder include polytetrafluoroethylene (PTFE), polyvinylidene fluoride (PVdF), fluororubber, styrene-butadiene rubber (SBR), polypropylene (PP), polyethylene (PE), and carboxymethyl cellulose (CMC).

Proportions of the negative electrode active material, the negative electrode conductive agent, and the negative electrode binder included in the negative electrode mixture layer are preferably 70 to 95% by weight, 0 to 25% by weight, and 2 to 10% by weight, respectively.

The negative electrode can be produced, for example, according to the following procedure. First, a negative electrode active material, a conductive agent, and a binder are mixed into an appropriate solvent, for example, N-methylpyrrolidone, to prepare a slurry. The slurry is coated onto the surface of the negative electrode current collector, and the coat is dried. The slurry may be coated onto only one surface of the negative electrode current collector. Alternatively, the slurry may be coated onto both of one surface of the negative electrode current collector and a surface opposite to that. The negative electrode mixture layer having a desired density is produced by pressing the dried coat, and thereby the negative electrode is completed.

(2) Positive Electrode

As a positive electrode current collector, a sheet including a material having high electrical conductivity may be used. For example, an aluminum foil or an aluminum alloy foil may be used as the positive electrode current collector. When the aluminum foil or the aluminum alloy foil is used, the thickness is, for example, 20 $\mu$m or less, and preferably 15 $\mu$m or less. The aluminum alloy foil may include one or more of magnesium, zinc, silicon, or the like. The amount of transition metals such as iron, copper, nickel, and chromium included in the aluminum alloy foil is preferably 1% or less.

The positive electrode mixture layer can include, in addition to the spinel-type lithium manganese oxide represented by Composition Formula $Li_{1-a}Mn_{2-x}M_xO_4$, at least one positive electrode active material having a capacity of from 10 mAh/g to 150 mAh/g per weight of the active material within a range of from 3.0 V to 3.9 V (vs. Li/Li$^+$) to the oxidation-reduction potential of metal Li. The positive electrode active material may be included within a range of from 0.01 to 0.05 when a weight per unit area of the spinel-type lithium manganese oxide is defined as 1. Examples of such positive electrode active material include lithium-nickel composite oxide (e.g., $LiNiO_2$), lithium-cobalt composite oxide ($LiCoO_2$), lithium-nickel-cobalt composite oxide (e.g., $LiNi_{1-x}Co_xO_2$, $0 < x < 1$), lithium-nickel-cobalt-manganese composite oxide (e.g., $LiNi_{1-x-y}Co_xMn_yO_2$, $0 < x < 1$, $0 < y < 1$, $0 < x + y < 1$), lithium-manganese-cobalt composite oxide (e.g., $LiMn_xCo_{1-x}O_2$, $0 < x < 1$), and lithium-iron phosphate ($LiFePO_4$).

A positive electrode conductive agent is used in order to improve current-collecting performance, as necessary. The positive electrode conductive agent is, for example, acetylene black, carbon black, graphite, and the like.

A positive electrode binder is used in order to bind the positive electrode active material and the positive electrode current collector. Examples of the positive electrode binder include polytetrafluoroethylene (PTFE), polyvinylidene fluoride (PVdF), fluororubber, styrene-butadiene rubber (SBR), polypropylene (PP), polyethylene (PE), and carboxymethyl cellulose (CMC).

Proportions of the positive electrode active material, the positive electrode conductive agent, and the positive electrode binder included in a positive electrode mixture layer are preferably 80 to 95% by weight, 3 to 20% by weight, and 2 to 7% by weight, respectively.

The positive electrode can be produced, for example, according to the following procedure. First, a positive electrode active material, a conductive agent, and a binder are mixed into an appropriate solvent, for example, N-methylpyrrolidone (NMP), to prepare a slurry. The slurry is coated onto the surface of the positive electrode current collector, and the coat is dried. The slurry may be coated onto only one surface of the positive electrode current collector. Alternatively, the slurry may be coated onto both of one surface of the negative electrode current collector and a surface opposite to that. The positive electrode mixture layer having a desired density is produced by pressing the dried coat, and thereby the positive electrode is completed.

(3) Separator

The separator is made of an insulating material, and can prevent the electrical contact of the positive electrode with the negative electrode. Preferably, the separator is made of a material that allows the nonaqueous electrolyte to pass through, or has a shape that allows the nonaqueous electrolyte to pass through. The separator is a non-woven fabric made of a synthetic resin, a porous polyethylene film, a porous polypropylene film, and a cellulose based separator, for example.

(4) Nonaqueous Electrolyte

The nonaqueous electrolyte may include, for example, a nonaqueous solvent, and an electrolyte and an additive which are dissolved in the nonaqueous solvent.

Any known nonaqueous solvents used for nonaqueous electrolyte batteries may be used as the nonaqueous solvent. First examples of nonaqueous solvent include cyclic carbonates such as ethylene carbonate (EC) and propylene carbonate (PC). Second examples of nonaqueous solvent include linear carbonates such as dimethyl carbonate, methyl ethyl carbonate, and diethyl carbonate; γ-butyrolactone, acetonitrile, methyl propionate; ethyl propionate; cyclic ethers such as tetrahydrofuran and 2-methyl tetrahydrofuran; and linear ethers such as dimethoxyethane and diethoxyethane. The second examples of solvent generally have viscosity lower than that of the first examples of solvent. The nonaqueous solvent may be a solvent obtained by mixing the first example of solvent with the second example of solvent.

The electrolyte is, for example, an alkali salt, and preferably a lithium salt. The electrolyte preferably includes at least one kind of lithium salt in which a van der Waals ion radius of an anion is 0.25 nm to 0.4 nm. Such a lithium salt is, for example, lithium hexafluorophosphate ($LiPF_6$), lithium hexafluoroarsenate ($LiA_sF_6$), and lithium trifluoromethanesulfonate ($LiCF_3SO_3$). Preferably, the electrolyte is lithium hexafluorophosphate ($LiPF_6$). The concentration of the electrolyte in the nonaqueous electrolyte is preferably 0.5 to 2 mol/L.

(5) Negative Electrode Terminal and Positive Electrode Terminal

The negative electrode terminal and the positive electrode terminal are preferably made of a material having high electrical conductivity. These terminals are preferably made of the same material as that of the current collector in order to reduce contact resistance when the terminals are connected to the current collector.

(6) Container Member

As the container member, for example, a metal container or a laminate film container may be used. However, the container member is not particularly limited.

A nonaqueous electrolyte battery having excellent impact resistance and long-term reliability can be achieved by using the metal container as the container member. The use of the laminate film container as the container member can achieve a nonaqueous electrolyte battery having excellent corrosion resistance, and at the same time, the weight of the nonaqueous electrolyte battery can be reduced.

A metal container having a wall thickness within a range of, for example, 0.2 to 5 mm may be used. The metal container more preferably has a wall thickness of 0.5 mm or less.

The metal container preferably includes at least one metal element selected from the group consisting of Fe, Ni, Cu, Sn, and Al. The metal container may be made of, for example, aluminum, an aluminum alloy, or the like. The aluminum alloy is preferably an alloy including elements such as magnesium, zinc, and silicon. When the alloy includes transition metals such as iron, copper, nickel, and chromium, the amount of these transition metals is preferably 1% by weight or less. Thereby, the long-term reliability and the impact resistance under a high temperature environment can be dramatically improved.

A laminate film container having a thickness being within a range of, for example, 0.1 to 2 mm may be used. The thickness of the laminate film is more preferably 0.2 mm or less.

The laminate film includes, for example, a multilayer film including a metal layer and resin layers sandwiching the metal layer. The metal layer preferably includes at least one metal selected from the group consisting of Fe, Ni, Cu, Sn, and Al. The metal layer is preferably made of an aluminum foil or an aluminum alloy foil in order to obtain a lightweight battery. As the resin layer, a high-molecular material such as polypropylene (PP), polyethylene (PE), nylon, or polyethylene terephthalate (PET) may be used. The laminate film can be molded into the shape of the container member through thermal sealing of the laminate film.

Examples of the form of the container member include a flat form (thin form), a rectangular form, a cylinder form, a coin form, and a button form. The container member can have various dimensions according to applications. For example, when the nonaqueous electrolyte battery according to the first embodiment is used in the application of a mobile electronic device, the container member can be miniaturized according to the size of the electronic device to be mounted to. Alternatively, when the nonaqueous electrolyte battery is to be mounted on to two-wheel or four-wheel vehicles or the like, the container member may be a container for a large-sized battery.

Next, an example of a nonaqueous electrolyte battery according to an embodiment will be described in more detail with reference to the drawings.

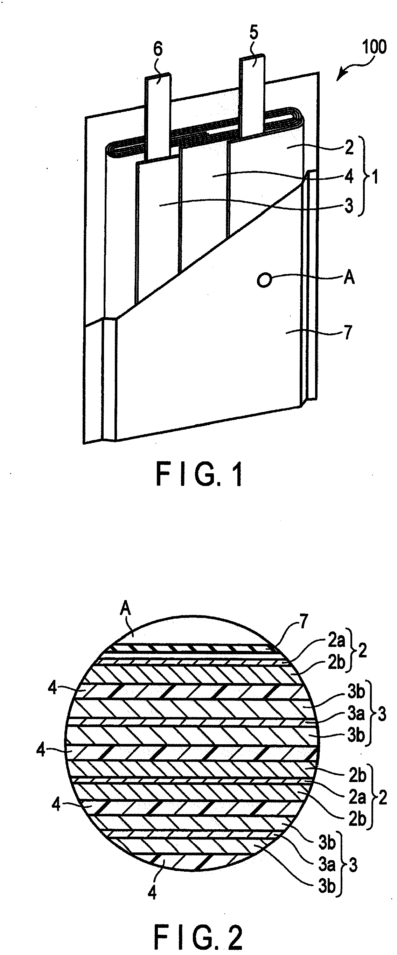

FIG. 1 is a partially cutout perspective view of a nonaqueous electrolyte battery of a first example according to the embodiment. FIG. 2 is an enlarged sectional view of part A of the nonaqueous electrolyte battery shown in FIG. 1.

A nonaqueous electrolyte battery 100 shown in FIGS. 1 and 2 includes a flat electrode group 1.

The flat electrode group 1 includes a negative electrode 2, a positive electrode 3, and a separator 4.

The negative electrode 2 includes a negative electrode current collector 2a and a negative electrode mixture layer 2b supported on the negative electrode current collector 2a, as shown in FIG. 2. The positive electrode 3 includes a positive electrode current collector 3a and a positive electrode mixture layer 3b supported on the positive electrode current collector 3a, as shown in FIG. 2.

In the electrode group 1, as shown in FIG. 2, the negative electrode 2 and the positive electrode 3 are stacked in a state where the separator 4 is sandwiched between the negative electrode mixture layer 2b and the positive electrode mixture layer 3b. The electrode group 1, as such, can be obtained according to the following procedure. First, a plate-like negative electrode 2, a separator 4, and a plate-like positive electrode 3 are laminated together, in this order. Next, another separator 4 is further stacked onto the positive electrode mixture layer 3b, to produce a laminate. The laminate is wound such that the outermost layer would be the negative electrode 2. Then, a winding core is extracted, and the laminate is then pressed into a flat shape. Thus, the electrode group 1 shown in FIGS. 1 and 2 can be obtained.

As shown in FIG. 1, in the nonaqueous electrolyte battery 100, a belt-like negative electrode terminal 5 is electrically connected to the negative electrode 2. A belt-like positive electrode terminal 6 is electrically connected to the positive electrode 3.

The nonaqueous electrolyte battery 100 shown in FIGS. 1 and 2 further includes a pouch 7 made of a laminate film, as a container. That is, the nonaqueous electrolyte battery 100 includes a container member consisting of a pouch 7 made of a laminate film.

The electrode group 1 is housed in the pouch 7 made of a laminate film. However, one end of each of the negative electrode terminal 5 and the positive electrode terminal 6 extend out from the pouch 7. A nonaqueous electrolyte, which is not shown, is housed in the pouch 7 made of a laminate film. The electrode group 1 is impregnated with the nonaqueous electrolyte. The circumference of the pouch 7 is heat-sealed. In this manner, the electrode group 1 and the nonaqueous electrolyte are sealed.

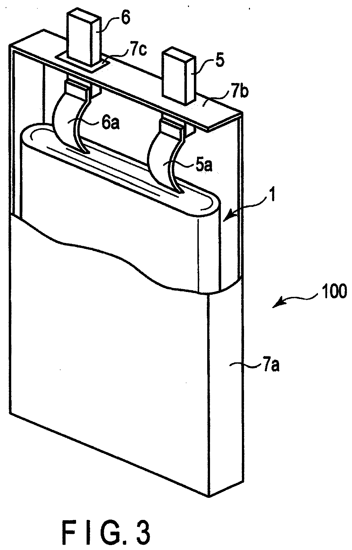

Next, a second example of a nonaqueous electrolyte battery according to a first embodiment will be described in detail with reference to FIG. 3.

FIG. 3 is a partially cutout perspective view of the nonaqueous electrolyte battery of the second example according to the first embodiment.

A nonaqueous electrolyte battery 100 shown in FIG. 3 is largely different from the nonaqueous electrolyte battery 100 of the first example in that a container member is configured from a metal container 7a and a sealing plate 7b.

The nonaqueous electrolyte battery 100 shown in FIG. 3 includes the same electrode group 1 as the electrode group 1 of the nonaqueous electrolyte battery 100 of the first example. However, the electrode group 1 of the second example shown in FIG. 3 differs from the electrode group of the first example in a point that a member, which is used as the negative electrode terminal 5 in the first example, is used as a negative electrode tab 5a, and in a point that a member, which is used as the positive electrode terminal 6 in the first example, is used as a positive electrode tab 6a.

In the nonaqueous electrolyte battery 100 shown in FIG. 3, the electrode group 1 is housed in the metal container 7a. The metal container 7a further houses a nonaqueous electrolyte. The metal container 7a is sealed by a metal sealing plate 7b. The metal container 7a and the metal sealing plate 7b compose a can as the container member.

The sealing plate 7b includes a negative electrode terminal 5 and a positive electrode terminal 6. An insulating member 7c is interposed between the positive electrode terminal 6 and the sealing plate 7b. Thereby, the positive electrode terminal 6 and the sealing plate 7b are electrically insulated from each other.

The negative electrode terminal 5 is connected to the negative electrode tab 5a as shown in FIG. 3. Similarly, the positive electrode terminal 6 is connected to the positive electrode tab 6a.

(Method for Measuring dQ/dV)

In measurement of dQ/dV, there is used a battery maintaining a capacity of 98% or more relative to a rated capacity. In the nonaqueous electrolyte battery of the embodiment, the rated capacity is defined as follows. First, the nonaqueous electrolyte battery is subjected to degassing after aging, and then subjected to persistent sealing, to which is performed an initial charging to a state of SOC 100%. A discharge capacity when the battery is discharged from this state at a constant current of 0.5 C until the cell voltage of the battery becomes 1.5 V is defined as the rated capacity. Here, in the initial charging, the nonaqueous electrolyte battery is charged at a constant current of 1 C rate, then charged at a constant voltage of 2.8 V, and this charging at constant voltage is performed until a current value becomes 0.05 C, to charge the battery to the state of SOC 100%. It should be noted that, a state reached when the nonaqueous electrolyte battery is discharged from SOC 100% at a constant current of 0.5 C until the cell voltage becomes 1.5 can be defined, for example, as a state of SOC 0%.

The state reached when the battery maintaining a capacity of 98% or more relative to a rated capacity is charged at a constant current of 1 C rate, then charged at a constant voltage of 2.8 V, and charged at this constant voltage until a current value becomes 0.05 C, is defined as SOC 100%. The battery is discharged from SOC 100% at a constant current of 0.5 C until the voltage becomes 1.5 V, during which, the capacity of the battery per voltage is measured. From the result, for example, dQ/dV is plotted on a vertical axis, and voltage is plotted on a horizontal axis, to obtain a dQ/dV curve of the battery. Herein, the capacity of the battery is preferably measured at least every 0.05 V.

(Aging of Nonaqueous Electrolyte Battery)

The nonaqueous electrolyte battery is subjected to aging, then subjected to degassing, and thereby gas generated in a cell can be reduced beforehand. By doing so, expansion of the nonaqueous electrolyte battery is prevented, and as a result, increase of electric resistance in the nonaqueous electrolyte battery can be suppressed.

Aging is performed in a state where the container member housing an electrode group and a nonaqueous electrolyte is subjected to temporary sealing. After the aging has finished, the cell of the nonaqueous electrolyte battery is subjected to degassing by releasing the temporary sealing, and the container member is then subjected to persistent sealing. As long as the temporary sealing can endure the pressure of the gas generated in the cell of the nonaqueous electrolyte battery during the aging, the form of the temporary sealing is not particularly limited. The temporary sealing for the degassing is preferably released, for example, under an inactive atmosphere or a reduced-pressure atmosphere.

The nonaqueous electrolyte battery can be subjected to aging under an environment, for example, of 60°C for 90 hours. A temperature for the aging can be raised or lowered, as necessary. A time for the aging can be extended or shortened, as necessary.

The nonaqueous electrolyte battery according to the first embodiment includes a negative electrode including an oxide of titanium, a positive electrode including spinel-type lithium manganese oxide represented by Chemical Formula $LiMn_{2-x}M_xO_4$ (M is at least one selected from the group consisting of Mg, Ti, Cr, Fe, Co, Zn, Al, and Ga, $0.22 \leq x \leq 0.7$), and a nonaqueous electrolyte.

When the nonaqueous electrolyte battery is discharged from SOC 100% to SOC 0% at a constant current of 0.5 C, a curve obtained by taking dQ/dV as a vertical axis and voltage as a horizontal axis has a first peak and a second peak. The first peak is a peak that appears within a range of from 2.54 V to 2.65 V, and the second peak is a peak that appears within a range of from 2.4 V to less than 2.54 V. A dQ/dV peak intensity A of the first peak and a dQ/dV peak intensity B of the second peak satisfy $0.8 \leq A/B \leq 1.0$. Thereby, the nonaqueous electrolyte battery according to the first embodiment can exhibit a high average operating voltage and excellent high-temperature durability.

(Second Embodiment)

According to a second embodiment, a battery pack is provided. The battery pack includes the nonaqueous electrolyte battery according to the first embodiment.

The battery pack according to the second embodiment may include a multitude of nonaqueous electrolyte batteries. The multitude of nonaqueous electrolyte batteries may be electrically connected in series, or may be electrically connected in parallel. Alternatively, the multitude of nonaqueous electrolyte batteries may also be connected in a combination of a connection in series and a connection in parallel.

For example, the battery pack according to the second embodiment may include five of the nonaqueous electrolyte batteries of the first embodiment. These nonaqueous electrolyte batteries may be connected in series. The nonaqueous electrolyte batteries connected in series can constitute a battery module. That is, the battery pack according to the second embodiment may include a battery module.

The battery pack according to the second embodiment may include a multitude of battery modules. The multitude of battery modules may be connected in series, in parallel, or in a combination of a connection in series and a connection in parallel.

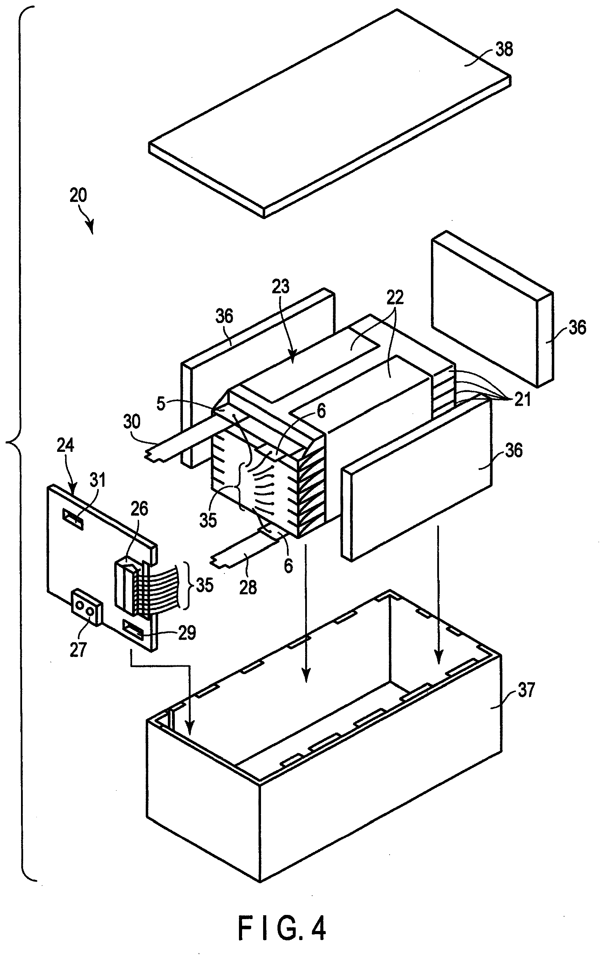

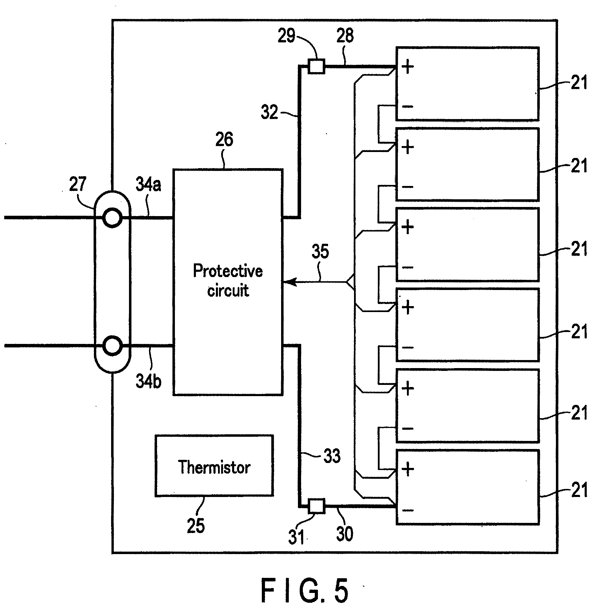

Hereinafter, an example of the battery pack according to the second embodiment will be described with reference to FIGS. 4 and 5.

FIG. 4 is an exploded perspective view of a battery pack of an example according to the second embodiment. FIG. 5 is a block diagram showing an electric circuit of the battery pack of FIG. 4.

A battery pack 20 shown in FIGS. 4 and 5 includes a multitude of unit cells 21. The unit cell 21 may be the flat nonaqueous electrolyte battery 100 of an example according to the first embodiment described with reference to FIG. 3.

The multitude of unit cells 21 are stacked so that negative electrode terminals 5 and positive electrode terminals 6, which externally extend out, are aligned in the same direction, and the unit cells 21 are bound by an adhesive tape 22 to constitute a battery module 23. As shown in FIG. 5, the unit cells 21 are electrically connected in series with one another.

A printed wiring board 24 is disposed so as to face towards the side surface of the unit cells 21 from which the negative electrode terminals 5 and the positive electrode terminals 6 extend out. As shown in FIG. 5, a thermistor 25, a protective circuit 26, and a conductive terminal 27 that conducts electricity to external devices are mounted on the printed wiring board 24. An insulating plate (not shown) is attached to the surface of the printed wiring board 24 facing the battery module 23 to avoid unnecessary connection with the wiring of the battery module 23.

A positive electrode lead 28 is connected to the positive electrode terminal 6 positioned on the lowermost layer of the battery module 23, and its one end is inserted into and electrically connected to a positive electrode connector 29 of the printed wiring board 24. A negative electrode lead 30 is connected to the negative electrode terminal 5 positioned on the uppermost layer of the battery module 23, and its one end is inserted into and electrically connected to a negative electrode connector 31 of the printed wiring board 24. These connectors 29 and 31 are connected to the protective circuit 26 through wirings 32 and 33 formed on the printed wiring board 24.

The thermistor 25 detects a temperature of the unit cells 21, and its detection signals are transmitted to the protective circuit 26. The protective circuit 26 can shut off a positive-side wiring 34a and a negative-side wiring 34b between the protective circuit 26 and the conductive terminal 27, under a predetermined condition. An example of a predetermined condition is, for example, when the temperature detected by the thermistor 25 is a predetermined temperature or higher. Also, another example of a predetermined condition is when an over-charge, over-discharge, over-current, or the like of the unit cells 21 is detected, for example. The detecting of the over-charge or the like is performed for individual unit cells 21 or the entire battery module 23 as a whole. When detecting is performed for individual unit cells 21, a battery voltage may be detected, or a positive electrode potential or a negative electrode potential may be detected. In the latter case, a lithium electrode is inserted in each individual unit cell 21 to be used as a reference electrode. In the case of the battery pack 20 in FIGS. 4 and 5, a wiring 35 for detecting voltage is connected to each unit cell 21. Detection signals are transmitted to the protective circuit 26 through these wirings 35.

A protective sheet 36 made of rubber or resin is disposed on each of the three side surfaces of the battery module 23 excluding the side surface from which the positive electrode terminal 6 and the negative electrode terminal 5 project.

The battery module 23 is housed in a housing container 37 together with each of the protective sheets 36 and printed wiring board 24. More specifically, the protective sheets 36 are arranged respectively on both inside surfaces along a long-side direction and an inside surface along a short-side direction of the housing container 37, and the printed wiring board 24 is disposed on an opposite inside surface along the short-side direction. The battery module 23 is positioned within a space enclosed by the protective sheets 36 and the printed wiring board 24. A cover 38 is mounted on an upper side of the housing container 37.

A heat-shrinkage tape may be used in place of the adhesive tape 22 to secure the battery module 23. In this case, after protective sheets are arranged on both side surfaces of the battery module and the heat-shrinkage tape is wound around, the heat-shrinkage tape is contracted by heating to fasten the battery module together.

In FIGS. 4 and 5, a configuration in which the unit cells 21 are connected in series is shown. However, in order to increase the battery capacity, these unit cells may be connected in parallel. Further, assembled battery packs may also be connected in series, in parallel, or both in series and in parallel.

Embodiments of the battery pack according to the second embodiment are appropriately changed depending on applications. Preferable applications of the battery pack according to the second embodiment are those in which cycle characteristics are desired along with large current characteristics. Specific examples of the applications include power sources for digital cameras, and for mounting on vehicles such as two to four-wheeled hybrid electric cars, two to four-wheeled electric cars, and assist bicycles. The battery pack according to the second embodiment is particularly preferable for mounting on vehicles.

Since the battery pack according to the second embodiment includes the nonaqueous electrolyte battery according to the first embodiment, the battery pack is able to exhibit high average operating voltage and exhibit excellent cycle characteristics, at the same time.

[Examples]

Hereinafter, the above embodiments will be described in more detail by way of examples.

(Example 1)

In Example 1, a nonaqueous electrolyte battery of Example 1 was produced according to the following procedure.

<Production of Positive Electrode>

In the nonaqueous electrolyte battery of Example 1, a mixture obtained by mixing spinel-type lithium manganese oxide $LiMn_{1.6}Al_{0.4}O_4$, in which M was Al and x = 0.4 in Chemical Formula $LiMn_{2-x}M_xO_4$, and lithium cobalt oxide at a ratio of 80 : 20 was used as a positive electrode active material. 91% by weight of active material powder of this positive electrode active material, 2.5% by weight of acetylene black, 3% by weight of graphite, and 3.5% by weight of polyvinylidene fluoride (PVdF) were added to N-methyl pyrrolidone (NMP), followed by mixing, to prepare a slurry. This slurry was coated on both surfaces of a current collector made of an aluminum foil having a thickness of 15 μm so that the coating amount for each surface would be 70 g/m$^2$, and the coat was dried. Then, the dried coat was pressed. Thus, a positive electrode having a positive electrode mixture layer having a density of 2.8 g/cm$^3$ was produced.

<Production of Negative Electrode>

A spinel-type lithium titanate powder was used as a negative electrode active material. 85% by weight of active material powder of this negative electrode active material, 5% by weight of graphite, 3% by weight of acetylene black, and 7% by weight of PVdF were added to NMP, followed by mixing, to prepare a slurry.

Subsequently, this slurry was coated on both surfaces of a current collector made of an aluminum foil having a thickness of 15 μm so that the coating amount for each surface would be 30 g/m$^2$, and the coat was dried. Then, the dried coat was pressed. Thus, a negative electrode having a negative electrode mixture layer having a density of 2.1 g/cm$^3$ was produced.

<Production of Electrode Group>

The positive electrode as produced above, a separator made of a porous polyethylene film having a thickness of 15 μm, the negative electrode as produced above, and a separator were laminated in this order. The obtained laminate was spirally wound so that the negative electrode was located as the outermost layer to produce an electrode group. The resulting product was heat-pressed at 90°C to produce a flat electrode group. The obtained electrode group was housed in an outer can as a container member. The outer can housing the electrode group was dried in a vacuum at about 95°C for 8 hours.

<Preparation of Nonaqueous Electrolyte Liquid>

Ethylene carbonate (EC) and methyl ethyl carbonate (MEC) were mixed in a volume ratio of 1 : 2 to prepare a mixed solvent. Lithium hexafluorophosphate (LiPF$_6$) was dissolved in the mixed solvent in a concentration of 1.0 mol/L to prepare a nonaqueous electrolyte liquid.

<Production of Battery>

Into an exterior can housing the electrode group obtained as described above, the nonaqueous electrolyte liquid was injected from an inlet formed on the surface of the exterior can. Then, the inlet was subjected to temporary sealing so that pressure resistance would be 0.4 MPa or more under a reduced-pressure environment of -90 kPa. The nonaqueous electrolyte battery was charged for 13 minutes at a 1 C rate, so as to set the state to SOC 20%, and then was subjected to aging under an environment of 60°C for 90 hours. After aging had finished, the temporary sealing was released under a reduced-pressure environment of -90 kPa to degas the cell interior. The inlet was subjected to persistent sealing to produce the nonaqueous electrolyte battery.

<A/B Value Measurement>

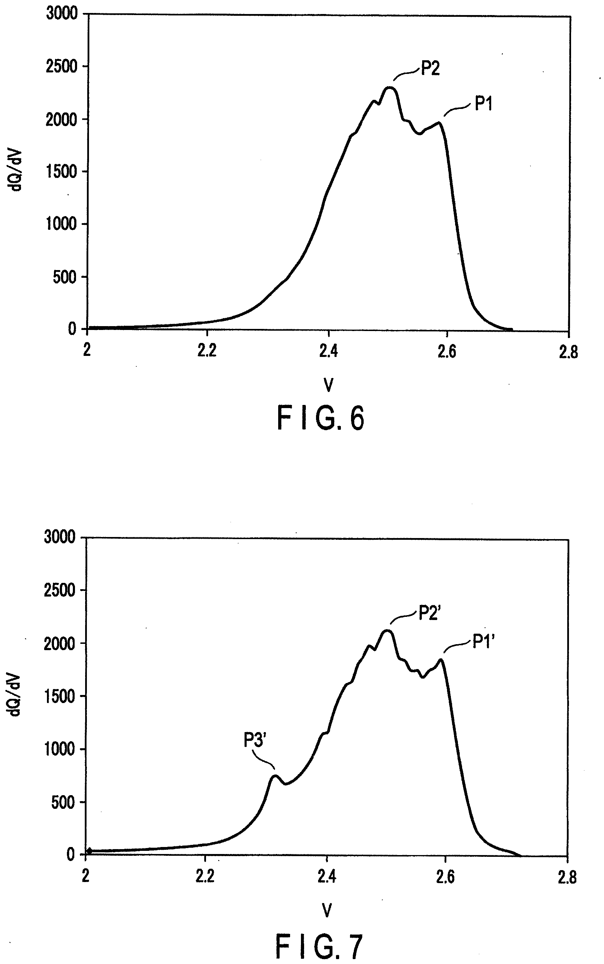

A dQ/dV plot curve for the nonaqueous electrolyte battery produced as described above was obtained by the above-mentioned measuring method of dQ/dV. The dQ/dV plot curve thus obtained is shown in FIG. 6. As shown in FIG. 6, the dQ/dV plot curve of Example 1 has a first peak (P1) at about 2.68 V and a second peak (P2) at about 2.50 V. In Example 1, a dQ/dV peak intensity ratio A/B between a dQ/dV peak intensity A of the first peak and a dQ/dV peak intensity B of the second peak was 0.86.

(Example 2)

In Example 2, a mixture obtained by mixing spinel-type lithium manganese oxide $LiMn_{1.6}Al_{0.4}O_4$, in which M was Al and x = 0.55 in Chemical Formula $LiMn_{2-x}M_xO_4$, and lithium cobalt oxide at a ratio of 80 : 20 was used as a positive electrode active material. A nonaqueous electrolyte battery was produced in the same manner as in Example 1 except for this condition.
In the nonaqueous electrolyte battery of Example 2, a dQ/dV peak intensity ratio A/B was 0.81.

(Example 3)

In Example 3, the coating amount of a positive electrode slurry for each surface was adjusted to 60 g/m². A nonaqueous electrolyte battery was produced in the same manner as in Example 1 except for this condition.
As shown in FIG. 7, a dQ/dV plot curve in Example 3 has a first peak (P1') at about 2.60 V, a second peak (P2') at about 2.50 V, and a third peak (P3') at about 2.31 V. In the nonaqueous electrolyte battery of Example 3, a dQ/dV peak intensity ratio A/B was 0.87.

(Comparative Example 1)

In Comparative Example 1, a mixture obtained by mixing spinel-type lithium manganese oxide $LiMh_{1.82}Al_{0.i8}O_4$, in which M was Al and x = 0.18 in Chemical Formula $LiMn_{2-x}M_xO_4$, and lithium cobalt oxide at a ratio of 80 : 20 was used as a positive electrode active material. A nonaqueous electrolyte battery was produced in the same manner as in Example 1 except for this condition.
In the nonaqueous electrolyte battery of Comparative Example 1, a dQ/dV peak intensity ratio A/B was 1.14.

(Comparative Example 2)

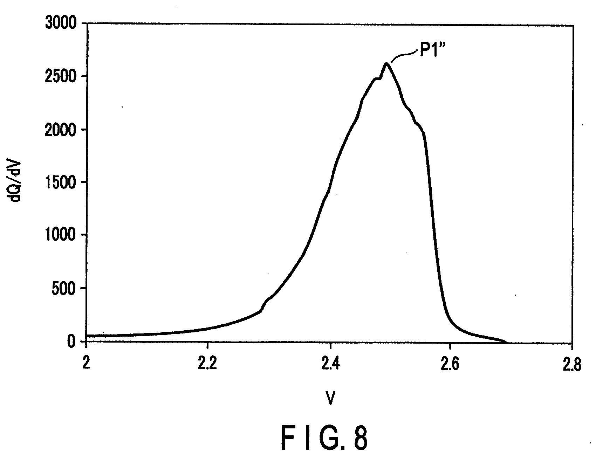

In Comparative Example 2, the coating amount of a positive electrode slurry for each surface was adjusted to 80 g/m². A nonaqueous electrolyte battery was produced in the same manner as in Example 1 except for this condition.
As shown in FIG. 8, in Comparative Example 2, a dQ/dV plot curve has only one peak (P1") at about 2.50 V.

(Comparative Example 3)

In Comparative Example 3, the coating amount of a positive electrode slurry for each surface was adjusted to 50 g/m². A nonaqueous electrolyte battery was produced in the same manner as in Comparative Example 1 except for this condition.
In the nonaqueous electrolyte battery of Comparative Example 3, a dQ/dV peak intensity ratio A/B was 1.11.

<Measurement of OCV in SOC 50%>

An open circuit cell voltage ($OCV_{50}$) when the charge rate of the nonaqueous electrolyte battery is 50% of a rated capacity was used as an index of average operating voltage. $OCV_{50}$ was measured as follows.

For each of Examples 1 to 3 and Comparative Examples 1 to 3, one each of cells of the nonaqueous electrolyte batteries, to which degassing has been performed after aging and subjected to persistent sealing, was discharged at a constant current of 0.5 C rate until a voltage was 1.5 V. Next, each of the batteries was charged at a constant current of 1 C rate, then charged at a constant current of 2.8 V until a current value was 0.05 C, so as to set the state to SOC 100%. Subsequently, the battery was discharged at a constant current of 0.5 C again until the voltage of the cell was 1.5 V (second discharge). From this state, the battery was charged at a constant current of 1 C rate so that a capacity charged would be equivalent to 50% of a discharge capacity during the second discharge, to thereby adjust the battery to initial state. It should be noted that, the nonaqueous electrolyte batteries of Examples 1 to 3 and Comparative Examples 1 to 3 were charged at a constant current of 1 C rate under an environment of 25°C for 0.5 hour after the second discharge, to set to initial state. Thus, each of the nonaqueous electrolyte batteries was charged so that the charge rate was set to 50% of the rated capacity. Each of the nonaqueous electrolyte batteries adjusted to initial state was left under an environment of 25°C for 1 hour. The voltage of the cell after being left for 1 hour was measured, and the value of the voltage was defined as $OCV_{50}$.

<High-Temperature Cycle Test>

One each of the nonaqueous electrolyte batteries of Examples 1 to 3 and Comparative Examples 1 to 3 was subjected to charge and discharge cycle 2000 times under an environment of 45°C. The nonaqueous electrolyte battery was charged and discharged at a 5 C rate within a voltage range of from 1.5 V to 2.8 V.

<Capacity Measurement>

During the cycle test, the capacity of each of the nonaqueous electrolyte batteries before and after the cycle test was measured by the following procedure.
First, each of the nonaqueous electrolyte batteries was charged at a constant current. For charging conditions, a current value was set to 0.2 C, and a final charge voltage was set to 2.8 V. The nonaqueous electrolyte battery was charged at a constant current until the voltage was 2.8 V, and then charged at constant voltage under an environment of 25°C until a current value was 0.05 C.
After charging, there was a break for 10 minutes. Then, the nonaqueous electrolyte battery was discharged. For discharging conditions, a current value was set to 0.2 C, and a final discharge voltage was set to 1.5 V. The nonaqueous electrolyte battery was discharged under an environment of 25°C with the current conditions kept constant. A discharge amount during the discharge was measured as a discharge capacity at 0.2 C.
A ratio between the capacity before the cycle test and the capacity after the cycle test measured by the above method was defined as a capacity retention rate in each of the nonaqueous electrolyte batteries.

<Electric Resistance Measurement>

During the above-mentioned cycle test, the electric resistance value of each of the nonaqueous electrolyte batteries before and after the cycle test was measured by the following procedure.
First, as in the charging in the above measurement of $OCV_{50}$, each of the nonaqueous electrolyte batteries was charged so that the charge rate would be 50% of the rated capacity. Then, these nonaqueous electrolyte batteries were discharged under an environment of 25°C. Here, the nonaqueous electrolyte batteries were discharged at a 10 C rate for 10 seconds. The electric resistance during the discharge was measured as follows. A voltage before a current was applied was defined as $V_0$. On the other hand, a voltage during the 10 second discharge was defined as $V_{10}$. When a current value equivalent to a 10 C rate is defined as $I_{10C}$, 10 second electric resistance $R_{10sec}$ is calculated from the following formula.

$$R_{10sec} = |V_{10}-V_0|/I_{10C}$$

The value of increase of $R_{10sec}$ after the cycle test as compared with that before the cycle test measured by the above method for Comparative Example 1 was normalized to 1.00. In Examples 1 to 3 and Comparative Examples 2 and 3, a ratio between the value of increase of $R_{10sec}$ before and after the cycle test and the value of increase of $R_{10sec}$

in Comparative Example 1 was defined as an electric resistance increase rate in each of the nonaqueous electrolyte batteries.

The peak intensity ratio A/B between the first peak and the second peak, the open-circuit voltage at SOC 50% ($OCV_{50}$), and the capacity retention rate and electric resistance increase rate during the cycle test in each of the nonaqueous electrolyte batteries of Examples 1 to 3 and Comparative Examples 1 to 3 are summarized in the table below.

[Table 1]

|  | A/B | $OCV_{50}$ (V) | Capacity Retention Rate (%) | Electric Resistance Increase Rate |
|---|---|---|---|---|
| Example 1 | 0.86 | 2.459 | 99.2 | 0.94 |
| Example 2 | 0.81 | 2.477 | 99.1 | 0.92 |
| Example 3 | 0.87 | 2.489 | 98.7 | 0.95 |
| Comparative Example 1 | 1.14 | 2.455 | 98.4 | 1.00 (standard) |
| Comparative Example 2 | - | 2.441 | 99.1 | 0.98 |
| Comparative Example3 | 1.11 | 2.483 | 97.3 | 1.13 |

From the above results, the average operating voltage in the nonaqueous electrolyte batteries of Examples 1 to 3 was higher than the average operating voltage in the nonaqueous electrolyte batteries of Comparative Examples 1 to 3. In addition, the obtained capacity retention rate after 2000 cycles was about 99%. Furthermore, when the electric resistance increase rate before and after the cycle in Comparative Example 1 was defined as 1.00, the electric resistance increase rate in the nonaqueous electrolyte batteries of Examples 1 to 3 was less than 0.95. That is, the resistance increase rate in the nonaqueous electrolyte batteries of Examples 1 to 3 was lower than the electric resistance increase rate in any of the nonaqueous electrolyte batteries of Comparative Examples 1 to 3. On the other hand, although high capacity retention rates could be obtained in Comparative Examples 1 and 2, the average operating voltage was decreased. It is found that although high average operating voltage is obtained in Comparative Example 3, the capacity retention rate is decreased. This result shows that the nonaqueous electrolyte batteries of Examples 1 to 3 have all of the high average operating voltage, the high-temperature durability, and the low rate of electric resistance increase in combination.

Among the nonaqueous electrolyte batteries of Examples 1 to 3, the nonaqueous electrolyte battery of Example 3, having the third peak at about 2.31 V in the dQ/dV curve obtained when the nonaqueous electrolyte battery was discharged from SOC 100% at 0.5 C until the voltage was 1.5 V, exhibited an average operating voltage higher than those of the other nonaqueous electrolyte batteries.

The nonaqueous electrolyte battery according to at least one embodiment and examples described above includes a negative electrode, a positive electrode, and a nonaqueous electrolyte. The negative electrode includes an oxide of titanium as a negative electrode active material. The positive electrode includes as a positive electrode active material, spinel-type lithium manganese oxide. The spinel-type lithium manganese oxide is represented by Chemical Formula $LiMn_{2-x}M_xO_4$. Herein, M is at least one selected from the group consisting of Mg, Ti, Cr, Fe, Co, Zn, Al, and Ga. Subscript x satisfies the inequality $0.22 \leq x \leq 0.7$. When the nonaqueous electrolyte battery is charged at a constant current of 1 C, thereafter charged at a constant voltage of 2.8 V, then charged at a constant voltage until a current value becomes 0.05 C, and from this state, discharged at a constant current of 0.5 C until a voltage becomes 1.5 V, a curve obtained by taking dQ/dV during discharge as a vertical axis and voltage as a horizontal axis has a first peak and a second peak. The first peak is a peak that appears within a range of from 2.54 V to 2.65 V, and the second peak is a peak that appears within a range of from 2.4 V to less than 2.54 V. A dQ/dV peak intensity A of the first peak and a dQ/dV peak intensity B of the second peak satisfy $0.8 \leq A/B \leq 1.0$. Thereby, the nonaqueous electrolyte battery according to embodiment can exhibit a high average operating voltage and excellent high-temperature durability.

While certain embodiments of the present invention have been described, these embodiments have been presented by way of example only, and are not intended to limit the scope of the invention. The novel embodiments may be embodied in a variety of other forms, and various omissions, substitutions and changes may be made without departing from the spirit of the invention. The accompanying claims and their equivalents are intended to cover such forms or modifications as would fall within the scope and spirit of the invention.

Reference Signs List

1 electrode group
2 negative electrode
2a negative electrode current collector
2b negative electrode mixture layer
3 positive electrode
3a positive electrode current collector
3b positive electrode mixture layer
4 separator
5 negative electrode terminal
5a negative electrode tab
6 positive electrode terminal
6a positive electrode tab
7 pouch
7a metal container
7b sealing plate
7c insulating member
20 battery pack
21 unit cell
22 adhesive tape
23 battery module
24 printed wiring board
25 thermistor
26 protective circuit
27 conductive terminal
37 housing container
100 nonaqueous electrolyte battery

**Claims**

1. A nonaqueous electrolyte battery comprising:

   a positive electrode; a negative electrode; and a nonaqueous electrolyte, wherein
   the positive electrode includes as a positive electrode active material, spinel-type lithium manganese oxide represented by Chemical Formula $LiMn_{2-x}M_xO_4$ wherein M is at least one selected from the group consisting of Mg, Ti, Cr, Fe, Co, Zn, Al, and Ga, and x is from 0.22 to 0.7,
   the negative electrode includes a lithium titanium oxide,
   and when the nonaqueous electrolyte battery is charged at a constant current of 1 C, thereafter charged at a constant voltage of 2.8 V, then charged at a constant voltage until a current value becomes 0.05 C, and from this state, discharged at a constant current of 0.5 C until a voltage becomes 1.5 V, a curve obtained by taking dQ/dV during the discharge as a vertical axis and voltage as a horizontal axis has a first peak and a second peak, where the first peak is a peak that appears within a range of from 2.54 V to 2.65 V, the second peak is a peak that appears within a range of from 2.4 V to less than 2.54 V, and a dQ/dV peak intensity A of the first peak and a dQ/dV peak intensity B of the second peak satisfy $0.8 \leq A/B \leq 1.0$.

2. The nonaqueous electrolyte battery according to claim 1, wherein the curve has a third peak within a range of from 2.2 V to less than 2.4 V.

3. The nonaqueous electrolyte battery according to claim 1 or 2, wherein the positive electrode includes as the positive electrode active material, a lithium-cobalt oxide.

4. The nonaqueous electrolyte battery according to claim 2, further comprising:

   a container member housing the negative electrode, the positive electrode, and the nonaqueous electrolyte, wherein the container member has a wall thickness being within a range of 0.2 to 5 mm, and the container member is a metal container comprising at least one metal element selected from a group consisting of Fe, Ni, Cu, Sn, and Al.

**5.** The nonaqueous electrolyte battery according to claim 2, further comprising a container member housing the negative electrode, the positive electrode, and the nonaqueous electrolyte,

wherein the container member has a wall thickness being within a range of 0.1 to 2 mm, and the container member is a laminate film container comprising a metal layer comprising at least one metal selected from a group consisting of Fe, Ni, Cu, Sn, and Al, and resin layers sandwiching the metal layer.

**6.** A battery pack comprising the nonaqueous electrolyte battery according to any one of claims 1 to 5.

**7.** The battery pack according to claim 6, wherein the battery pack comprises five of the nonaqueous electrolyte batteries, and the nonaqueous electrolyte batteries are connected electrically in a series.

**8.** The battery pack according to claim 7, wherein the battery pack comprises a battery module comprising five of the nonaqueous electrolyte batteries, the battery pack comprising a multitude of the battery modules, and the multitude of battery modules being connected electrically in a series, in parallel, or in a combination of a connection in a series and a connection in parallel.

FIG. 1

FIG. 2

FIG. 3

**F I G. 4**

F I G. 5

F I G. 6

F I G. 7

FIG. 8

## INTERNATIONAL SEARCH REPORT

International application No.

PCT/JP2015/070595

### A. CLASSIFICATION OF SUBJECT MATTER
*H01M10/052*(2010.01)i, *H01M2/02*(2006.01)i, *H01M4/36*(2006.01)i, *H01M4/505*(2010.01)i, *H01M4/525*(2010.01)i, *H01M10/0587*(2010.01)i

According to International Patent Classification (IPC) or to both national classification and IPC

### B. FIELDS SEARCHED

Minimum documentation searched (classification system followed by classification symbols)
H01M2/02, H01M4/00-4/62, H01M10/05-10/0587, H01M10/36-10/39

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996-2015 |
| Kokai Jitsuyo Shinan Koho | 1971–2015 | Toroku Jitsuyo Shinan Koho | 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-082466 A (The Nippon Chemical Industrial Co., Ltd.), 21 March 2000 (21.03.2000), entire text (Family: none) | 1-8 |
| A | JP 2005-302507 A (Sumitomo Metal Mining Co., Ltd.), 27 October 2005 (27.10.2005), entire text (Family: none) | 1-8 |
| A | JP 2014-177371 A (Saga University), 25 September 2014 (25.09.2014), entire text (Family: none) | 1-8 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 October 2015 (05.10.15) | 13 October 2015 (13.10.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
| --- |
| PCT/JP2015/070595 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2014-116308 A  (Samsung Fine Chemicals Co., Ltd.),<br>26 June 2014 (26.06.2014),<br>entire text<br>& US 2014/0162127 A1<br>entire text<br>& EP 2741353 A1 | 1-8 |
| A | WO 2012/017824 A1  (NEC Corp.),<br>09 February 2012 (09.02.2012),<br>entire text<br>& JP 2012-54220 A        & US 2013/0119940 A1<br>entire text | 1-8 |
| A | WO 2011/065503 A1  (Nissan Motor Co., Ltd.),<br>03 June 2011 (03.06.2011),<br>entire text<br>& JP 5333605 B2        & US 2012/0153220 A1<br>entire text<br>& EP 2506347 A1 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001143705 A

**Non-patent literature cited in the description**

- *GS YUASA Technical Report,* December 2004, vol. 1 (1